# DEMANDE DE BREVET EUROPEEN

(11) **EP 2 375 358 A1**
(43) Date de publication de la demande: **12.10.2011**
(21) Numéro de dépôt: 11161199.2
(22) Date de dépôt: 05.04.2011
(51) Int. Cl.: G06F 21/00, G07F 7/10

(54) **Compteur d'événements dans un système adapté au langage JavaCard**

(30) Priorité: 07.04.2010 FR 1052602
(71) Demandeur: PROTON WORLD INTERNATIONAL N.V., 1930 Zaventem (BE)
(72) Inventeur: Van Nieuwenhuyze, Olivier, 1970, Wezembeek-Oppem (BE)
(74) Mandataire: de Beaumont, Michel

(57) **Abrégé**

L'invention concerne une réalisation d'un compteur dans un microcontrôleur adapté au langage JavaCard en respectant le caractère atomique d'une modification de la valeur de ce compteur, dans lequel une réinitialisation du compteur s'effectue par l'envoi, au microcontrôleur, d'une commande (VERIFY APIN) de vérification d'un code utilisateur en soumettant un code correct (GOOD), et un décrément de la valeur du compteur s'effectue en envoyant, au microcontrôleur, ladite commande de vérification du code utilisateur avec une valeur de code erronée (BAD).

## Description

### Domaine de l'invention

La présente invention concerne de façon générale les circuits électroniques et, plus particulièrement, les microcontrôleurs embarqués dans des dispositifs électroniques. L'invention s'applique plus particulièrement aux microcontrôleurs portés par des cartes à microcircuits ou analogues et susceptibles d'exécuter des programmes en langage Java adapté aux cartes à microcircuits, couramment appelé langage JavaCard.

### Exposé de l'art antérieur

De plus en plus de cartes à microcircuits, qu'il s'agisse de cartes de paiement, de modules d'identification d'abonné (SIM), de cartes de transport, etc. sont adaptées à exécuter des programmes en langage JavaCard. On parle généralement d'applications Java (Applet) et de machines virtuelles adaptées au langage JavaCard (JCVM - JavaCard Virtual Machine).

Tout microprocesseur adapté au langage JavaCard, et plus particulièrement tout microcontrôleur de carte à microcircuit adapté à un tel langage, doit respecter certaines contraintes propres aux caractéristiques du programme JavaCard.

Parmi ces contraintes, toute mise à jour d'une donnée JavaCard dans une mémoire non volatile (généralement désignée mémoire persistante dans le langage Java) du circuit doit être atomique. En JavaCard, une donnée Java correspond généralement à 1 octet, un mot court (2 octets) ou un tableau de données. Le caractère atomique d'une commande ou transaction (suite d'instructions) exécutée par un microcontrôleur signifie qu'une ou plusieurs variables mises en oeuvre par cette transaction ne risquent pas d'être fournies avec un état quelconque en cas d'interruption de la transaction (par exemple par perte de l'alimentation du circuit). Le cas le plus simple est une variable ayant un état initial et un état final. L'atomicité d'une transaction mettant en oeuvre cette variable signifie alors que, même en cas d'interruption de la transaction, la variable ne risque pas d'être fournie dans un état intermédiaire.

Cette contrainte conduit généralement à différer les opérations de mise à jour des données en mémoire non volatile afin de ralentir le moins possible les opérations. Ainsi, l'écriture d'une donnée en mémoire non volatile ne s'effectue qu'en fin d'un processus de traitement.

Une conséquence d'un tel différé dans l'enregistrement en mémoire non volatile est qu'il n'est pas possible de mettre en oeuvre un compteur sécurisé. Par compteur sécurisé, on entend un compteur dont la valeur indiquée peut être considérée comme fiable vis-à-vis de l'opération ou de la transaction que surveille ce compteur. Un tel compteur peut être souhaitable pour compter de façon fiable un nombre d'exécutions d'une application JavaCard, par exemple, pour contrôler le nombre de diffusions d'un contenu dans un système de diffusion à péage, pour décrémenter un nombre d'utilisations d'un titre de transport ou d'accès (cinéma, par exemple), etc.

Pour qu'un tel compteur soit fiable, il faut qu'une intervention volontaire ou accidentelle sur la carte, par exemple par coupure de son alimentation, ne permette pas d'empêcher une mise à jour du compteur. Il faudrait pour cela que la mise à jour du compteur puisse être atomique au moment où l'écriture se déroule. Or, dans un environnement JavaCard, il faudrait décider que toutes les mises à jour de données sont atomiques au moment où elles sont déclenchées, ce qui ralentirait considérablement le traitement.

La thèse "The use of a power analysis for influencing PIN verification on cryptographic smart card" de Lukas Folkman de 2007 (Masaryk University - Faculty of Informatics) et l'article "Formal Reasoning About Non-atomic Java Card Methods in Dynamic Logic" de Wojciech Mostowski de 2006 (Department of Computing Science, Radboud University Nijmegen) décrivent des compteurs de vérification du nombre de tentatives de saisie d'un code utilisateur.

### Résumé

Un objet d'un mode de réalisation de la présente invention est de proposer une solution permettant la mise en oeuvre d'un compteur sécurisé dans un environnement JavaCard.

Un objet d'un autre mode de réalisation de l'invention est de proposer une solution compatible avec les environnements d'exécution existants, en particulier avec les cartes à puce existantes.

Pour atteindre tout ou partie de ces objets ainsi que d'autre, il est prévu un procédé de réalisation d'un compteur dans un microcontrôleur adapté au langage JavaCard en respectant le caractère atomique d'une modification de la valeur de ce compteur, dans lequel:
Le compteur est réinitialisé par l'envoi, au microcontrôleur, d'une commande de vérification d'un code utilisateur, cette commande incluant une valeur de code correcte ; et
la valeur du compteur est décrémentée en envoyant, au microcontrôleur, ladite commande de vérification du code utilisateur avec une valeur de code erronée, les valeurs correcte et erronée étant stockées en mémoire non volatile du microcontrôleur.

On prévoit également un procédé de comptage du nombre d'exécutions d'un programme écrit en langage JavaCard mettant en oeuvre un tel compteur.

On prévoit également un procédé de comptage du nombre d'utilisations d'un objet JavaCard mettant en oeuvre un tel compteur.

On prévoit également un procédé de surveillance du déroulement d'une section d'un programme dans lequel :
un compteur est décrémenté au moins une fois au début de l'exécution de la section ;
la valeur du compteur est comparée à une valeur maximale de réinitialisation ; et
le compteur est réinitialisé, en fin de section, uniquement en cas d'exécution correcte.

On prévoit également un système électronique adapté à exécuter des programmes en langage JavaCard, comportant au moins une mémoire non volatile réinscriptible et au moins une mémoire volatile, dans lequel une mise à jour d'un compteur de transactions est effectuée conformément au procédé ci-dessus.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles:
La figure 1 représente de façon très schématique un exemple de microcontrôleur d'une carte à puce auquel s'applique la présente invention ;
la figure 2 illustre par un schéma bloc les fonctions intervenant dans un traitement d'application JavaCard ;
la figure 3 illustre de façon très schématique les échanges entre une application JavaCard et une mémoire interne au microcontrôleur ;
les figures 4A et 4B illustrent, de façon très schématique, le caractère atomique d'une commande exécutée par un microcontrôleur ;
la figure 5 représente de façon très schématique une section de programme illustrant un mode de mise en oeuvre de l'invention ;
la figure 6 illustre de façon très schématique les échanges, entre l'environnement d'exécution de l'application JavaCard et la mémoire interne du microcontrôleur, dans le mode de mise en oeuvre de la figure 5 ;
la figure 7 détaille les échanges, entre l'environnement d'exécution de l'application JavaCard et la mémoire du microcontrôleur, lors d'une étape du procédé de la figure 5 ; et
la figure 8 détaille ces échanges lors d'une autre étape de vérification du mode de mise en oeuvre de la figure 5.

### Description détaillée

De mêmes éléments ont été désignés par de mêmes références aux différentes figures. Pour des raisons de clarté, seuls les étapes et éléments utiles à la compréhension de l'invention ont été représentés et seront décrits. En particulier, les applications JavaCard auxquelles s'applique l'invention n'ont pas été détaillées, l'invention ne modifiant pas ces applications en elles-mêmes. De plus, les échanges entre l'environnement de l'application JavaCard et le reste du circuit électronique intégrant le microprocesseur n'ont été exposés que pour les besoins de l'invention, le reste du fonctionnement et des échanges n'étant pas modifié.

L'invention sera décrite par la suite en relation avec un exemple d'application à une carte à puce à microcontrôleur. Elle s'applique toutefois plus généralement à tout circuit électronique intégrant un microprocesseur et des mémoires internes volatiles et non volatiles, et qui est adapté à exécuter des programmes en langage JavaCard.

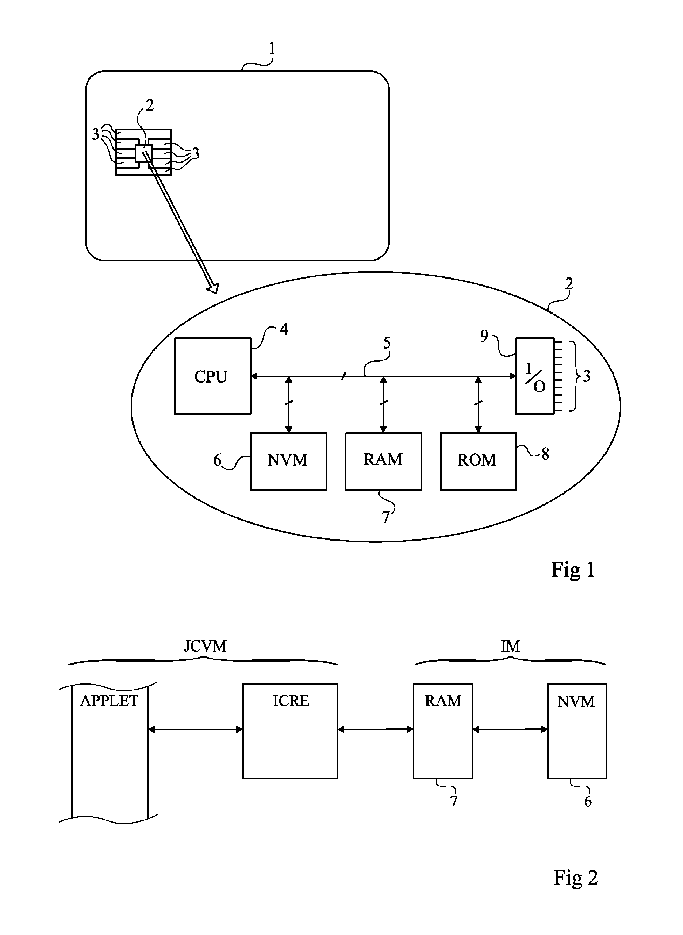

La figure 1 représente, de façon schématique, une carte 1 à puce 2 du type auquel s'applique la présente invention. Dans l'exemple de la figure 1, la carte à puce est une carte à contacts 3. Toutefois, la présence ou l'absence de contacts ne modifie en rien ce qui va être décrit. Dans le cas d'une carte à puce sans contact, les plots métalliques 3 de reprise de contact sont remplacés ou complétés par une antenne d'un circuit oscillant pour communiquer avec un terminal émettant un champ électromagnétique.

Comme l'illustre la figure 1, une puce 2 à microcontrôleur comprend essentiellement une unité centrale de traitement 4 communiquant, par l'intermédiaire d'un ou plusieurs bus 5, avec des mémoires internes parmi lesquelles, notamment une mémoire 6 non volatile réinscriptible (NVM), par exemple de type EEPROM. La puce 2 comporte également une mémoire vive 7 (RAM) pour exécuter les calculs courants et stocker temporairement des données, et une mémoire à lecture seule 8 (ROM) contenant généralement les programmes exécutés par l'unité centrale 4. Enfin, l'unité centrale 4 est également reliée (dans cet exemple par le bus 5) à un circuit 9 d'entrée-sortie (I/O) qui est par ailleurs connecté aux contacts 3. Dans le cas d'une puce sans contact (transpondeur électromagnétique), le circuit d'entrée-sortie module une porteuse et se trouve donc relié à un circuit oscillant formant une antenne.

Bien entendu, la carte à puce (plus généralement l'élément électronique comprenant le microcontrôleur embarqué) peut comprendre d'autres composants et circuits selon les applications.

La figure 2 illustre, de façon schématique et fonctionnelle, les éléments intervenant dans l'exécution d'une application JavaCard (programme en langage JavaCard). Côté microprocesseur 4, celui-ci émule une machine virtuelle (JCVM) qui exécute une application JavaCard (APPLET) en émulant un environnement d'exécution adapté au langage JavaCard (JCRE - JaveCard Run Time Environment). L'environnement d'exécution sert d'intermédiaire entre les instructions de l'application JavaCard et les éléments de mémorisation interne (IM - Internal Memory) du circuit parmi lesquels la mémoire volatile 7 ou autre registre ou élément de mémorisation temporaire, et la mémoire non volatile réinscriptible 6 (NVM). Il fournit les interfaces de programmation des applications (API - Application Programming Interface) aux applications chargées.

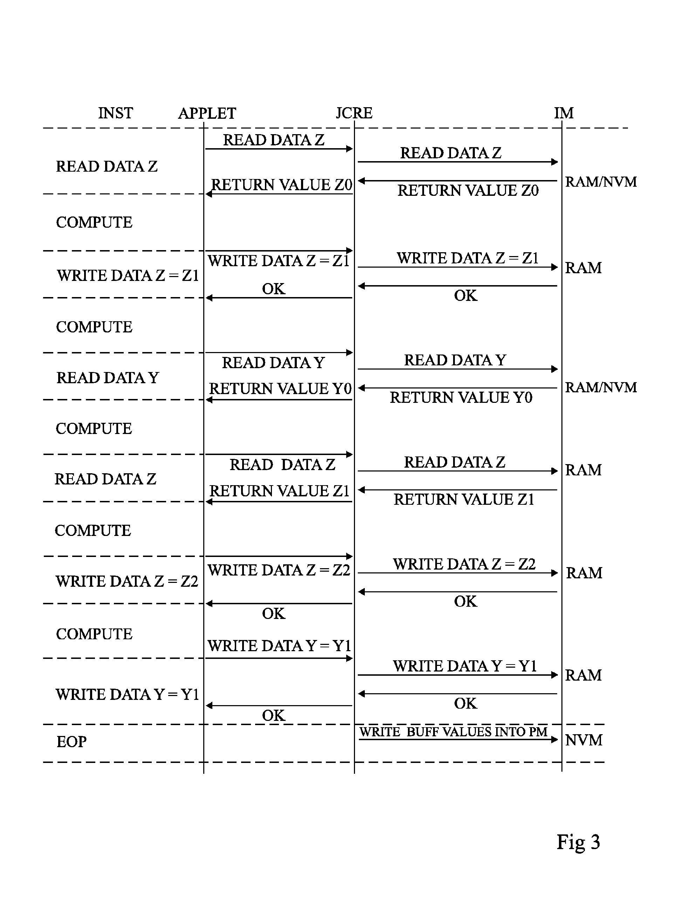

La figure 3 illustre différents échanges lors de l'exécution d'un traitement JavaCard.

On suppose des opérations successives (COMPUTE) manipulant des données Z et Y stockées en mémoire non volatile de la carte. Ces opérations sont donc entrecoupées d'instructions de lecture (READ DATA) ou d'écriture (WRITE DATA) en mémoire de la valeur de ces données. Côté application JavaCard (APPLET), les instructions successives INST de lecture, d'écriture et de traitement des données sont traitées par l'environnement d'exécution JCRE du microprocesseur qui gère les accès à la mémoire interne, qu'il s'agisse de la mémoire temporaire ou de la mémoire non volatile.

Une instruction de lecture de données READ DATA côté application JavaCard engendre, par le microcontrôleur, la lecture de la donnée dans la mémoire interne IM du circuit. Cette mémoire (RAM ou NVM) retourne la valeur de la donnée, respectivement Z0, Z1, Y0 selon l'endroit (NVM/RAM) où est stockée la donnée. Cette valeur est retournée RETURN VALUE par l'environnement du microcontrôleur à l'application JavaCard. Une écriture d'une valeur d'une donnée WRITE DATA consiste, sous commande de l'environnement d'exécution, à provoquer l'écriture de la valeur, par exemple Z1, Y1, Z2, dans la mémoire vive RAM, puis une réponse d'exécution (OK) jusqu'à l'application JavaCard. Différentes phases de calcul (COMPUTE) peuvent ou non intervenir entre les diverses lectures et écritures.

A la fin du traitement (EOP - End Of Processing), l'environnement d'exécution de l'application JavaCard provoque l'écriture, en mémoire non volatile (WRITE BUFF VALUES INTO PM), des valeurs mémorisées temporairement.

Il ressort de l'exposé ci-dessus qu'en cas d'interruption du traitement avant la fin, l'atomicité de la transaction n'est pas respectée. Dans l'exemple de la figure 3, une interruption avant l'écriture en mémoire non volatile peut conduire à une donnée Z ayant la valeur Z0, Z1 ou Z2 et une donnée Y ayant la valeur Y0 ou Y1. Ce n'est qu'après l'écriture en mémoire non volatile que la valeur de cette donnée est, dans l'exemple de la figure 3, fixée respectivement à Z2 et à Y1.

Un tel différé dans l'enregistrement en mémoire non volatile ne permet pas la mise en oeuvre d'un compteur sécurisé.

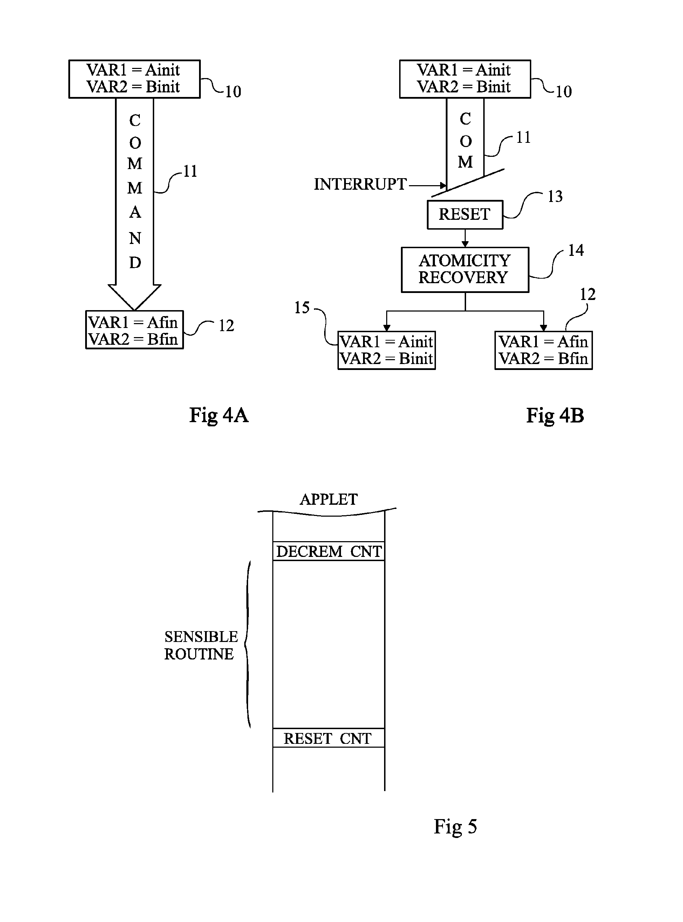

Les figures 4A et 4B illustrent, de façon très schématique et générale, le caractère atomique d'une commande exécutée par un microcontrôleur. La figure 4A illustre le déroulement de la commande sans interruption. La figure 4B illustre ce déroulement en présence d'une interruption. L'interruption est généralement, dans le cas d'une carte à puce à contacts, une disparition d'alimentation du microcontrôleur. Plus généralement, il s'agit de n'importe quelle perturbation entraînant un disfonctionnement du microcontrôleur et provoquant sa réinitialisation.

Dans l'exemple de la figure 4A, on suppose une commande mettant en oeuvre deux variables VAR1 et VAR2 ayant respectivement des états initiaux Ainit et Binit et devant prendre, en fin d'exécution de la commande, des états finaux Afin et Bfin. Les variables VAR1 et VAR2 sont stockées dans la mémoire non volatile 6. Au début de l'exécution de la commande (bloc 10), les variables VAR1 et VAR2 sont dans leurs états initiaux respectifs Ainit et Binit. En supposant que la commande (bloc 11, commande) s'exécute normalement, la mémoire non volatile contient, en fin d'exécution pour les variables VAR1 et VAR2, leurs états finaux respectifs (bloc 12).

Dans le cas (figure 4B) où une interruption INTERRUPT se produit au cours de l'exécution de la commande 11, par exemple par disparition de l'alimentation de la carte à puce, une procédure spécifique est alors mise en oeuvre. Cette procédure consiste, lors de la réinitialisation (bloc 13, RESET) suite à la remise sous tension de la carte, en une récupération de l'atomicité (bloc 14, ATOMICITY RECOVERY) de la transaction. Cette procédure conduit dans cet exemple à retrouver, dans la mémoire non volatile, soit les états finaux (bloc 12) des variables, soit leurs états initiaux (bloc 15).

Dans l'exemple ci-dessus, on suppose que la transaction est considérée comme atomique pourvu que la mise à jour des variables A et B soit effectuée pour les deux variables ou pas du tout. Par conséquent, un état intermédiaire dans lequel une seule des deux variables est mise à jour est considéré comme un état invalide ou non autorisé. Pour que le caractère atomique de la transaction soit respecté, il faut que les états des variables dans la mémoire non volatile et leur combinaison correspondent à des états considérés comme logiquement cohérents. Il faut donc qu'en cas d'interruption de la transaction, le processeur soit capable de reconstituer l'un des états ou combinaison cohérent.

On notera que dans l'exemple d'un compteur, une seule variable (la valeur du compteur) est mise à jour.

De nombreuses techniques de récupération de l'atomicité de transaction existent. Par exemple, le brevet US N° 6 535 997 décrit un processeur d'exécution de transactions entre un système externe et une carte à puce dans lequel est mis en oeuvre une procédure de récupération du caractère atomique de la transaction.

Dans un environnement JavaCard, l'atomicité d'une mise à jour des données peut être configurée. Toutefois, dans ce cas, toute écriture de données va devoir être effectuée immédiatement pour respecter ce caractère atomique. Par conséquent, cela ralentit considérablement l'exécution des applications JavaCard ce qui n'est pas souhaitable.

On aurait pu penser créer un objet JavaCard spécifique, c'est-à-dire une séquence d'instructions particulière qui rendrait atomique la mise à jour d'une valeur d'un compteur. Toutefois, une telle solution requiert de modifier les caractéristiques du programme JavaCard existant et est incompatible avec le parc de microcontrôleurs possédant un environnement d'exécution d'application JavaCard.

La figure 5 est une représentation schématique d'un programme en langage JavaCard intégrant une transaction ou un processus (SENSIBLE ROUTINE) dont on souhaite vérifier le nombre d'occurrences au moyen d'un compteur. Pour cela, on prévoit le décrément d'un compteur (DECREM CNT) au début de la routine à protéger et une réinitialisation de ce compteur en fin de routine. Cette réinitialisation replace la valeur du compteur à une valeur limite.

Le rôle du compteur est de compter, de façon fiable, le nombre d'exécutions de la fonction ou transaction particulière. La plage du programme encadrée par le décrément et la réinitialisation du compteur dépend de la portion du programme qui est considérée comme sensible du point de vue de son nombre d'exécutions. Par exemple, le compteur de la figure 5 sert à détecter si le programme SENSIBLE ROUTINE subit des attaques par injection de fautes conduisant à plusieurs exécutions sans en terminer une. Le compteur est alors décrémenté sans jamais être réinitialisé. Cela permet de détecter un dépassement du nombre d'exécutions autorisé.

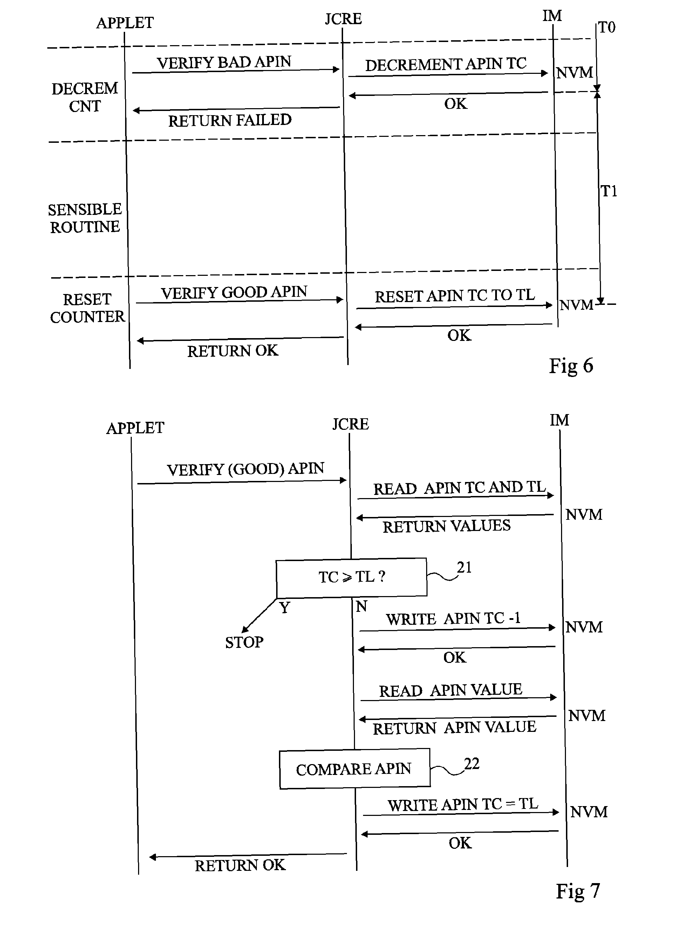

La figure 6 est une représentation schématique illustrant les échanges fonctionnels entre l'environnement JavaCard et la mémoire interne du circuit en mettant en oeuvre les fonctions de décrément du compteur et de réinitialisation de celui-ci comme illustré en figure 5.

La mise en oeuvre de l'invention tire profit de l'existence, dans l'environnement JavaCard, d'une interface API particulière de caractère atomique. Il s'agit de la commande ou interface de vérification d'un code d'identification de l'utilisateur (OWNER PIN). Les caractéristiques du programme JavaCard prévoient que le compteur de vérification du nombre de tentatives de saisie d'un code utilisateur soit mis à jour en mémoire non volatile à chaque tentative.

On propose d'utiliser ce compteur pour dénombrer le nombre d'exécutions de la transaction à surveiller sans toutefois requérir la saisie d'un code par l'utilisateur. Pour cela, on définit dans le circuit, par exemple en mémoire non volatile, un code APIN de la taille correspondant à un code d'identification d'utilisateur usuel. Deux valeurs de ce code sont stockées en mémoire non volatile : une valeur correcte GOOD et une valeur erronée BAD.

La création du code APIN s'effectue par une instruction spécifique JavaCard (instruction Create ou "Constructor") dans laquelle on précise la longueur du code et le nombre d'essais possibles. Ce nombre d'essais correspond à la valeur de réinitialisation du compteur. La valeur correcte GOOD est affectée au code au moyen d'une autre commande spécifique (UPDATE) du langage JavaCard. La longueur du code a peu d'importance dans la mesure où il est détourné de son usage habituel et ne sert pas à authentifier un utilisateur.

En début de processus, pour effectuer un décrément du compteur, l'application JavaCard (APPLET) contient une commande ordonnant une vérification du code PIN sur la base du mauvais code (VERIFY BAD APIN). Cette commande, traitée par l'environnement d'exécution JCRE, provoque de façon habituelle pour la commande de vérification du code d'utilisateur et comme on le verra par la suite en relation avec les figures suivantes, un décrément du compteur TC (Try Counter) de tentatives (DECREMENT APIN TC). Le décrément du compteur est, conformément aux caractéristiques du langage JavaCard pour ce type de transaction, directement inscrit en mémoire non volatile NVM de la mémoire interne. Une fois le décrément effectué, le microcontrôleur retourne un signal (OK) indiquant le décrément du compteur à l'environnement JCRE. Bien que cela n'ait pas d'importance pour l'application JavaCard exécutée, l'environnement JCRE retourne un message comme quoi l'authentification à échouée (RETURN FAILED).

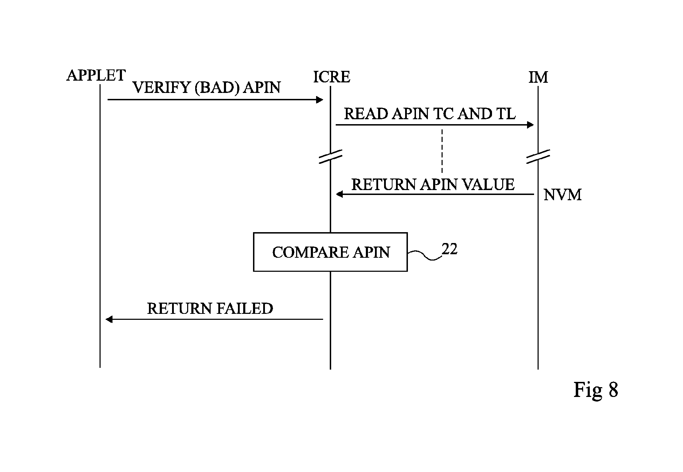

Dans l'exemple de la figure 5, une fois la transaction surveillée SENSIBLE ROUTINE effectuée, à la fin du processus, l'application contient une commande de réinitialisation du compteur. Cette commande inclut (figure 6) une instruction de vérification du code utilisateur sur la base de la bonne valeur (VERIFY GOOD PIN). Comme on le verra par la suite en relation avec la figure 8, à partir du moment où le bon code utilisateur est présenté, la commande VERIFY PIN engendre une réinitialisation (RESET APIN TC TO TL) du compteur de tentatives TC à une valeur limite TL (Try Limit) et un stockage immédiat de cette valeur en mémoire non volatile. L'accusé réception (OK) retourné par le microcontrôleur est alors un message comme quoi l'authentification a réussi (RETURN OK). Ce message n'est, comme le message de retour de l'instruction de décrément du compteur, pas exploité par l'application. Toutefois, comme il s'agit de la commande VERIFY PIN, un mécanisme d'exception propre au langage JavaCard est alors déclenché.

En cas d'interruption du processus pendant la période T1 qui se situe entre les deux écritures en mémoire non volatile de la valeur du compteur, le mécanisme de récupération d'atomicité provoquera un retour à la valeur du compteur décrémenté, fixée en fin de période T0. Une interruption avant la mise à jour du décrément du compteur ne changera pas sa valeur. Une interruption après sa réinitialisation retournera la valeur limite TL.

La figure 7 illustre les étapes de la commande de réinitialisation du compteur. La commande VERIFY PIN, avec le bon code transmis par l'application à l'environnement d'exécution, se traduit, en JavaCard, par une lecture (READ APIN TC AND TL) de la valeur courante TC du compteur et de sa valeur limite TL. Ces valeurs, stockées en mémoire non volatile, sont retournées au microprocesseur. Une étape 21 de comparaison (TC≥TL ?) vérifie que le nombre de tentatives TC n'excède pas le seuil TL. Si le nombre de tentatives maximum est atteint, le microcontrôleur arrête le traitement (STOP) sans même effectuer la comparaison de l'identifiant et l'application décide de la suite à donner. Si par contre le nombre limite n'est pas atteint, le microcontrôleur décrémente le compteur de tentatives APIN TC en mémoire non volatile (WRITE APIN TC-1). A réception d'un accusé réception (OK) de ce décrément, le microcontrôleur provoque la lecture (READ APIN VALUE) de la valeur du code stocké en mémoire non volatile. Cette valeur lui est retournée (RETURN APIN VALUE). Puis, le microcontrôleur effectue une comparaison (bloc 22, COMPARE APIN) de la valeur stockée par rapport à la valeur envoyée par l'application. En supposant, comme dans le cas de la figure 7, que le code envoyé par l'application est le bon, le microcontrôleur provoque alors la réinitialisation (WRITE APIN TC=TL) du compteur de tentatives à sa valeur limite et son écriture immédiate en mémoire non volatile. Quand l'inscription a bien été effectuée en mémoire, le microcontrôleur renvoie à l'application un message de fin de commande (RETURN OK).

La figure 8 illustre la commande de décrément du compteur. On suppose que le nombre limite de tentatives n'est pas atteint. L'envoi de la commande VERIFY (BAD) PIN avec le mauvais (BAD) code se traduit par un fonctionnement identique à celui de la figure 7 jusqu'au retour (RETURN APIN VALUE), par la mémoire non volatile, de la valeur du code PIN stocké. Par contre, l'étape de comparaison 22 se traduit par une absence d'identité entre les codes. Le compteur de tentatives n'est alors pas réinitialisé et le microcontrôleur retourne à l'application un message d'échec (RETURN FAILED).

La mise en oeuvre de ce compteur dans une application JavaCard est particulièrement simple. Lorsque le compteur doit être réinitialisé, il suffit d'envoyer la commande avec le bon code utilisateur. Par contre, lorsque le compteur doit être décrémenté de façon fiable, il suffit d'envoyer la mauvaise commande. Le nombre de commandes en décrément et de réinitialisations va dépendre de l'application.

Par exemple, pour réaliser un compteur de nombre d'utilisations d'une donnée ou du nombre d'exécutions d'une application JavaCard, on peut initialiser le compteur lors de l'installation de l'application puis ne pas prévoir de réinitialisation ultérieure. L'application cessera donc de fonctionner une fois le nombre d'exécutions effectué.

Un tel compteur peut également être utilisé pour contrôler l'exécution correcte d'une application d'une partie de celle-ci. Cela permet notamment de détecter une éventuelle injection de faute visant à détourner une partie du programme, c'est-à-dire de faire en sorte que certaines instructions ne soient pas exécutées. Par exemple, au début d'une section surveillée ou à plusieurs endroits de la section, la commande de vérification est envoyée avec le mauvais code. Le compteur est alors décrémenté. En fin de section surveillée, on compare le contenu du compteur. S'il est à la valeur maximale, c'est qu'au moins une partie de la section (celle contenant le décrément du compteur) n'a pas été exécutée. Si le compteur est à une valeur correcte (valeur maximale décrémentée du nombre de commandes de décrément normalement prévues), il est réinitialisé à sa valeur maximale. Si le compteur est à une autre valeur que celle attendue, c'est qu'au moins une partie de la section surveillée n'a pas été exécutée.

La mise en oeuvre du compteur ne nuit pas à la rapidité d'exécution de l'application dans la mesure où elle ne requiert pas de rendre atomique toutes les écritures de données liées à l'application.

Toutefois, l'utilisation d'un objet de classe OWNER PIN entraine que le compteur est mis à jour en mémoire non volatile directement, même si la séquence est intégrée dans une transaction ayant une atomicité différente. Par conséquent en cas de récupération de l'état initial d'une transaction, les autres données reprendront leurs états initiaux respectifs, mais le compteur restera à sa valeur modifiée. Par conséquent, son résultat reste fiable.

Par ailleurs, la mise en oeuvre de ce compteur est compatible avec les cartes à puces et autres circuits électroniques existants adaptés au langage JavaCard. En effet, de tels circuits possèdent alors la commande VERIFY PIN et la mise en oeuvre de l'invention ne modifie en rien cette commande.

Divers modes de réalisation ont été décrits. Diverses variantes et modifications apparaîtront à l'homme de l'art. En particulier, le choix des valeurs à donner aux codes correct et erroné est arbitraire pourvu de respecter la taille du code d'utilisateur accepté par la commande VERIFY PIN du langage JavaCard. De plus, la mise en oeuvre pratique de l'invention à partir des indications fonctionnelles données ci-dessus est à la portée de l'homme du métier.

## Revendications

1. Procédé de réalisation d'un compteur dans un microcontrôleur adapté au langage JavaCard, dans lequel :
le compteur est réinitialisé par l'envoi, au microcontrôleur, d'une commande (VERIFY APIN) de vérification d'un code utilisateur, cette commande incluant une valeur de code correcte (GOOD) ; et
la valeur du compteur est décrémentée en envoyant, au microcontrôleur, ladite commande de vérification du code utilisateur avec une valeur de code erronée (BAD), les valeurs correcte (GOOD) et erronée (BAD) étant stockées en mémoire non volatile du microcontrôleur.

2. Procédé selon la revendication 1, dans lequel une modification de la valeur du compteur s'effectue de façon atomique.

3. Procédé de comptage du nombre d'exécutions d'un programme écrit en langage JavaCard mettant en oeuvre un compteur conforme à la revendication 1 ou 2.

4. Procédé de comptage du nombre d'utilisations d'un objet JavaCard mettant en oeuvre un compteur conforme à l'une quelconque des revendications 1 à 3.

5. Procédé de surveillance du déroulement d'une section d'un programme dans lequel:
un compteur conforme à l'une quelconque des revendications précédentes est décrémenté au moins une fois au début de l'exécution de la section ;
la valeur du compteur est comparée à une valeur maximale de réinitialisation ; et
le compteur est réinitialisé, en fin de section, uniquement en cas d'exécution correcte.

6. Système électronique adapté à exécuter des programmes en langage JavaCard, comportant au moins une mémoire non volatile réinscriptible et au moins une mémoire volatile, dans lequel une mise à jour d'un compteur de transactions est effectuée conformément au procédé selon la revendication 1 ou 2.
